# FASCICULE DE BREVET EUROPEEN

(11) **EP 2 536 969 B1**
(45) Date de publication et mention de la délivrance du brevet: **01.04.2015**
(21) Numéro de dépôt: 11709981.2
(22) Date de dépôt: 11.02.2011
(51) Int. Cl.: F16L 15/00, E21B 43/10, E21B 17/042

(54) **JOINT FILETÉ EXPANSIBLE ET PROCÉDÉ DE RÉALISATION**
EXPANDIERBARE SCHRAUBVERBINDUNG UND HERSTELLUNGSVERFAHREN DAFÜR
EXPANSIBLE THREADED JOINT AND METHOD FOR MAKING SAME

(30) Priorité: 17.02.2010 FR 1000664
(43) Date de publication de la demande: 26.12.2012
(73) Titulaire: VALLOUREC OIL AND GAS FRANCE, 59620 Aulnoye-Aymeries (FR)
(72) Inventeur: DURIVAULT, Jérôme, 74000 Annecy (FR); BUREAU-BAYART, Anne-Sophie, F-59830 Bachy (FR); VERGER, Eric, F-59144 Gommegnies (FR)
(74) Mandataire: Marsolais, Richard
(86) Numéro de dépôt international: PCT/FR2011/000084
(87) Numéro de publication internationale: WO 2011/101554

(56) Documents cités:
- WO-A1-93/18329
- FR-A1- 2 834 326
- US-A- 5 154 452
- US-A- 5 765 836

## Description

L'invention concerne le domaine des joints étanches de composants tubulaires, utilisés notamment pour des puits d'hydrocarbures ou pour des puits similaires, par exemple en géothermie. Lors de leur utilisation, les joints sont soumis à des contraintes de compression et de traction importantes et doivent éviter une désolidarisation. Les joints sont également soumis à des sollicitations de pression intérieure ou extérieure de fluide, de flexion ou encore de torsion, éventuellement combinées, d'intensité pouvant fluctuer et à des fréquences susceptibles de varier. L'étanchéité doit être assurée malgré les sollicitations et malgré les conditions d'emplois rudes sur chantier.

Depuis quelques années, il est envisagé de soumettre les tubes, in situ, à une expansion diamétrale avec déformation plastique permanente. Les joints doivent rester opérationnels après la déformation plastique d'expansion diamétrale, qu'ils subissent comme les tubes. Il est souhaitable que les joints filetés tiennent après expansion diamétrale plastique, en conservant l'essentiel des propriétés qui les font apprécier, notamment de tenue mécanique en traction/compression, avec ou sans surpression interne ou externe, ainsi que d'étanchéité.

Le brevet FR 2 834 326 de la demanderesse propose un joint pourvu de deux languettes s'engageant respectivement dans des concavités selon un profil en forme de S avec un jeu radial au niveau des parties supérieure et inférieure des "S". Le contact en fin de vissage se fait entre des surfaces sensiblement radiales et des surfaces sensiblement cylindriques, tournées l'une vers l'autre, des languettes. Lors de l'expansion diamétrale, se produit un basculement d'une des languettes vers l'autre renforçant l'étanchéité du joint.

L'invention vient améliorer la situation, notamment pour l'étanchéité dans le cas où les opérations d'expansion sont des opérations à taux d'expansion élevés (notamment supérieurs à 15%) ou bien des opérations d'expansion sous compression.

Le joint fileté expansible peut être utilisé dans l'exploration ou l'exploitation des puits d'hydrocarbures ou de géothermie. Le joint fileté expansible comprend un premier composant tubulaire comportant une extrémité mâle comprenant une première et une deuxième zones filetées disposées sur une surface périphérique extérieure et une région d'insertion ménagée entre les première et deuxième zones filetées. La région d'insertion est pourvue d'une première languette annulaire comprenant une face de butée saillante et d'une première concavité adjacente à la première languette et en retrait sur celle-ci.

Le joint fileté expansible comprend un second composant tubulaire comportant une extrémité femelle comprenant une troisième et une quatrième zones filetées disposées sur une surface périphérique intérieure, et une région d'insertion ménagée entre lesdites troisième et quatrième zones filetées. La région d'insertion est pourvue d'une deuxième languette annulaire comprenant une face de butée saillante, et d'une deuxième concavité adjacente à la deuxième languette et en retrait sur celle-ci. Les première et deuxième zones filetées de l'extrémité mâle sont homologues des troisième et quatrième zones filetées de l'extrémité femelle pour être vissées avec. Les zones filetées comportent des filets respectivement mâle et femelle. Les première et deuxième languettes sont engagées respectivement dans les première et deuxième concavités à l'état vissé, la face de butée d'au moins l'une des première et deuxième languettes étant en contact avec respectivement la deuxième ou la première concavité. L'extrémité mâle comprend une première surface entre la première zone filetée et la première languette et l'extrémité femelle comprend une deuxième surface entre la troisième zone filetée et la deuxième concavité. Lesdites première et deuxième surfaces définissent à l'état vissé un espace annulaire comprenant une zone de forte dimension radiale du côté des première et troisième zones filetées et une zone de faible dimension radiale du côté de la première languette et de la deuxième concavité. La zone de faible dimension radiale est apte à former, après expansion, une étanchéité par contact métal-métal. La première languette prend appui sur la seconde languette.

La zone de forte dimension radiale favorise la déformation de l'extrémité mâle lors de l'expansion et facilite le basculement de la première languette vers la deuxième languette pour créer une étanchéité métal-métal entre lesdites languettes. La zone de faible dimension radiale permet de former une étanchéité métal-métal entre les première et deuxième surfaces dès le début de l'expansion diamétrale.

Dans un mode de réalisation, une surface de l'extrémité mâle disposée entre la première languette et la première concavité, et une surface de l'extrémité femelle disposée entre la deuxième languette et la deuxième concavité sont en contact à l'état vissé. Lesdites surfaces peuvent présenter une longueur axiale relativement faible par rapport à la longueur axiale desdites première et deuxième surfaces.

Dans un mode de réalisation, la première surface de l'extrémité mâle est bombée. La première surface de l'extrémité mâle peut comprendre une portion concave au voisinage de la première zone filetée et une portion convexe au voisinage de la première languette, en coupe axiale.

Dans un mode de réalisation, la première surface de l'extrémité mâle présente un diamètre maximal situé entre un tiers et deux tiers de sa longueur, préférablement entre la moitié et les deux tiers de sa longueur en partant de la première zone filetée.

Dans un mode de réalisation, la première surface de l'extrémité mâle présente, au voisinage de la première languette, un diamètre supérieur à son diamètre au voisinage de la première zone filetée.

Dans un mode de réalisation, l'étanchéité par contact métal-métal est réalisée au moyen d'une portion bombée au voisinage de la première languette de l'extrémité mâle. Une portion tronconique peut être prévue au voisinage de la deuxième concavité de l'extrémité femelle.

Dans un mode de réalisation, la première surface de l'extrémité mâle est tronconique au voisinage de la première languette. La deuxième surface de l'extrémité femelle peut être tronconique au voisinage de la deuxième concavité.

Dans un mode de réalisation, la zone de forte dimension radiale du côté des première et troisième zones filetées est définie entre une surface intérieure tronconique et une surface extérieure en arc de cercle.

Dans un autre mode de réalisation, ladite zone de forte dimension radiale est définie entre une surface intérieure en arc de cercle et une surface extérieure tronconique. Dans un autre mode de réalisation, ladite zone de forte dimension radiale est définie entre deux surfaces en arc de cercle.

Dans un mode de réalisation, la zone de faible dimension radiale du côté de la première languette et de la deuxième concavité présente une dimension radiale nulle. Optionnellement, une interférence est prévue. Ainsi, un contact se produit entre l'extrémité mâle et l'extrémité femelle lors du vissage. L'expansion diamétrale génère, dès le début, une étanchéité métal-métal entre la première surface de l'extrémité mâle et la deuxième surface de l'extrémité femelle.

Dans un autre mode de réalisation, la zone de faible dimension radiale du côté de la première languette et de la deuxième concavité présente une dimension radiale non nulle. Le vissage est facilité.

Dans un mode de réalisation, la première surface de l'extrémité mâle présente une gorge annulaire au voisinage de la première zone filetée. La deuxième surface de l'extrémité femelle au voisinage de la première zone filetée peut alors présenter soit une gorge annulaire, soit une forme simple d'usinage économique, par exemple dans le prolongement de la troisième zone filetée. La gorge annulaire ménagée à partir de la première surface de l'extrémité mâle facilite l'expansion diamétrale et le basculement de la première languette.

Dans un autre mode de réalisation, la deuxième surface de l'extrémité femelle présente une gorge annulaire au voisinage de la troisième zone filetée et la première surface de l'extrémité mâle peut présenter une forme simple, par exemple dans le prolongement de la première zone filetée.

La gorge peut présenter une profondeur comprise entre 6 et 13 % de l'épaisseur du composant tubulaire en section courante. On entend par section courante du composant tubulaire la région située entre ses deux extrémités, par exemple entre une extrémité mâle et une extrémité femelle.

Dans un mode de réalisation, les première et troisième zones filetées et/ou les deuxième et quatrième zones filetées comprennent des filets à interférence à la fois sur des flancs d'engagement et sur des flancs porteurs à l'état vissé. Toutefois, il peut être avantageux de prévoir un jeu sur les flancs d'engagement afin de favoriser le vissage.

Dans un mode de réalisation, les première et troisième zones filetées et/ou les deuxième et quatrième zones filetées comprennent des filets radialement autoaccrochants. Les filets radialement autoaccrochants peuvent comprendre des crochets et/ou des flancs à angle négatifs. Les filets radialement autoaccrochants peuvent être en queue d'aronde. Les filets sont de forme choisie pour éviter un décrochage ou saut de filet.

Dans un mode de réalisation, la longueur de la première surface de l'extrémité mâle est comprise entre 150 et 175 % de l'épaisseur du composant tubulaire en section courante.

Dans un mode de réalisation, la longueur de la deuxième surface de l'extrémité femelle est comprise entre 145 et 170 % de l'épaisseur du composant tubulaire en section courante.

Dans un mode de réalisation, la longueur de la deuxième concavité est comprise entre 16 et 24 % de l'épaisseur du composant tubulaire en section courante.

Dans un mode de réalisation, l'épaisseur de l'extrémité mâle au niveau de la zone de forte dimension radiale de l'espace annulaire est comprise entre 66 et 76 % de l'épaisseur du composant tubulaire en section courante.

Dans un mode de réalisation, l'épaisseur de l'extrémité mâle au niveau de la zone de faible dimension radiale de l'espace annulaire est comprise entre 50 et 85 % de l'épaisseur du composant tubulaire en section courante.

Dans un mode de réalisation, l'épaisseur de l'extrémité femelle au niveau de la zone de forte dimension radiale de l'espace annulaire est comprise entre 45 et 55 % de l'épaisseur du composant tubulaire en section courante.

Dans un mode de réalisation, l'épaisseur de l'extrémité mâle entre la première languette et la deuxième zone filetée est comprise entre 50 et 55 % de l'épaisseur du composant tubulaire en section courante.

Dans un mode de réalisation, l'épaisseur de l'extrémité femelle entre la deuxième languette et la quatrième zone filetée est comprise entre 62 et 66 % de l'épaisseur du composant tubulaire en section courante.

Dans un mode de réalisation, la dimension radiale de la première languette et de la première concavité est comprise entre 22 et 27 % de l'épaisseur du composant tubulaire en section courante.

Dans un mode de réalisation, la dimension radiale de la deuxième languette est comprise entre 10 et 15 % de l'épaisseur du composant tubulaire en section courante.

Dans un mode de réalisation, la dimension radiale de la deuxième concavité est comprise entre 10 et 15 % de l'épaisseur du composant tubulaire en section courante.

Dans un mode de réalisation, les première et deuxième languettes présentent des sections axiales de forme générale rectangulaire.

Dans un mode de réalisation, la zone de forte dimension radiale et la zone de faible dimension radiale de l'espace annulaire sont continues.

L'invention concerne également un procédé de réalisation d'un joint fileté étanche en partant d'un joint fileté tel que décrit ci-dessus. On fait subir audit joint fileté une expansion diamétrale dans le domaine des déformations plastiques à l'aide d'un boulet d'expansion de diamètre supérieur au diamètre intérieur des composants tubulaires. Le boulet d'expansion est déplacé axialement dans le joint. Ledit espace annulaire est dimensionné pour que la première surface subisse un déplacement axial vers la deuxième surface lors de l'expansion diamétrale de façon que lesdites première et deuxième surfaces interfèrent radialement formant une étanchéité métal-métal tout en laissant subsister la zone de forte dimension radiale de l'espace annulaire. Ledit espace annulaire est également dimensionné pour que la première surface subisse un déplacement radial dû au fait qu'il y a affaissement lors de la déformation de l'élément femelle et maintien de l'élément mâle.

Dans un mode de réalisation, la première surface subit un déplacement axial en direction de la première languette. La première languette subit un basculement en direction de la deuxième languette de façon qu'une surface intérieure de la première languette et une surface extérieure de la deuxième languette interfèrent radialement formant une étanchéité métal-métal. On obtient ainsi deux étanchéités métal-métal axialement distantes.

Dans un mode de réalisation, le taux d'expansion est supérieur à 15 %, préférablement supérieur à 20 %.

D'autres caractéristiques et avantages de l'invention apparaîtront à l'examen de la description détaillée ci-après, et des dessins annexés, sur lesquels :
- les figures 1 et 2 illustrent de façon schématique, dans une vue en coupe longitudinale un premier joint fileté à l'état vissé et à l'état expansé respectivement ;
- la figure 3 est une vue de détail de l'extrémité femelle du premier joint fileté et la figure 4 est une vue de détail de l'extrémité mâle du premier joint fileté ;
- les figures 5 et 6 illustrent de façon schématique, dans une vue en coupe longitudinale, un second joint fileté à l'état vissé et à l'état expansé, respectivement ;
- les figures 7 et 8 illustrent de façon schématique, dans une vue en coupe longitudinale, un troisième joint fileté à l'état vissé et à l'état expansé, respectivement ;
- les figures 9 et 10 illustrent de façon schématique dans une vue partielle en coupe longitudinale, un quatrième joint fileté à l'état vissé et à l'état expansé, respectivement ;
- les figures 11 et 12 illustrent de façon schématique dans une vue partielle en coupe longitudinale, un cinquième joint fileté à l'état vissé et à l'état expansé, respectivement ; et
- la figure 13 est une vue de détail d'un filet en queue d'aronde.

Les dessins annexés pourront non seulement servir à compléter l'invention, mais aussi à contribuer à sa définition, le cas échéant. L'invention ne se limite pas aux exemples de joints des tubes décrits, à titre non limitatif, mais enveloppe toutes les variantes que pourra envisager l'homme de l'art.

On revient ici sur le forage de puits, pour les hydrocarbures ou géothermie. Traditionnellement, le haut d'un puits est d'abord foré sur une profondeur relativement faible de quelques dizaines de mètres à l'aide d'un outil de gros diamètre, de l'ordre par exemple de 500 mm, et est cuvelé à l'aide d'une colonne de tubes de ce diamètre. Le diamètre de forage diminue ensuite par pas jusqu'au fond du puits qui peut être foré avec un diamètre nettement plus faible, de l'ordre de 150 mm dans le même exemple. Un tel puits est alors cuvelé à l'aide de plusieurs colonnes de tubes concentriques, descendues chacune en fin de forage au diamètre correspondant et toutes suspendues depuis la surface; les tubes de plus gros diamètre s'étendent depuis la surface jusqu'à quelques dizaines de mètres de profondeur et les tubes de plus petit diamètre s'étendent depuis la surface jusqu'au fond du puits, dont la profondeur peut atteindre plusieurs milliers de mètres. L'espace entre les tubes de cuvelage et le terrain est par exemple cimenté.

Après que le puits est entièrement foré et cuvelé, une colonne de tubes de production peut être descendue pour permettre notamment la remontée des hydrocarbures jusqu'à la surface, c'est-à-dire l'exploitation effective du puits. On comprend que cette colonne de tubes de production possède un diamètre extérieur légèrement inférieur au diamètre intérieur de la colonne de tubes de cuvelage. Équiper un puits conduit donc à mettre en oeuvre un grand nombre de tubes de différentes dimensions le plus souvent assemblés bout à bout à l'aide de joints filetés compte tenu des avantages de ce type d'assemblage. On cherche à rendre ces tubes les plus minces possibles, pour ne pas nécessiter de trop gros diamètres de tubes de cuvelage près de la surface. Or le respect des contraintes et spécifications applicables aux joints filetés conduit souvent à leur donner une épaisseur plus grande que celle de la partie courante des tubes; ce qui oblige à augmenter la progression diamétrale entre colonnes concentriques, lorsqu'on descend en profondeur dans le puits.

L'assemblage des tubes entre eux a lieu soit par vissage des extrémités filetées des tubes les unes dans les autres (joints dits intégraux), soit à l'aide de manchons filetés recouvrant leurs extrémités. Les tubes sont descendus successivement après vissage dans l'extrémité du tube ou du manchon précédent.

La spécification API 5 CT de l'American Petroleum Institute (API) définit ainsi des joints filetés tubulaires entre deux tubes de grande longueur ("integral-joint tubing", "extrême-ligne casing"), ainsi que des assemblages filetés manchonnés comportant deux joints filetés permettant d'assembler deux tubes de grande longueur à l'aide d'un manchon. Ces joints API ne sont étanches que par l'adjonction d'une graisse chargée de particules métalliques qui remplit les interstices entre filets.

Bien entendu les liaisons entre tubes (ou entre tubes et manchons) doivent rester étanches quelles que soient les sollicitations que les tubes subissent lors de leur descente dans le puits, et dans une large limite de masse supportée, puisque chaque joint soutient au moins partiellement des tubes situés au-dessous de lui. Aussi les performances mécaniques des joints filetés apparaissent-elles intimement liées à leurs caractéristiques géométriques.

Avec un joint fileté, on définit une "efficacité" de la connexion en traction, qui est déterminée par le rapport entre la section transversale du tube au droit du filetage et la section transversale du tube dans sa longueur. Dans le cas de joints à simple filetage cette efficacité est de 100 % pour les joints manchonnés à filetages coniques et filets évanouissants. En revanche le manchon possède un diamètre extérieur supérieur à celui du tube et est de ce fait relativement encombrant. Les joints intégraux ne peuvent atteindre une efficacité de 100 % qu'à condition d'épaissir fortement les extrémités des tubes par forgeage. Les filetages cylindriques bi-étagés procurent une efficacité moins élevée à encombrement équivalent et sont plus longs à positionner et à visser que les filetages coniques à filets évanouissants.

Par contre, lorsque la pression de fluide intérieure ou extérieure exercée sur les tubes devient excessive, les filetages peuvent désengrener. Ce phénomène de désengrènement est en partie lié à la forme des filetages utilisés. Ceux ci sont généralement des filetages triangulaires à flancs inclinés et sommets arrondis ou des filetages trapézoïdaux à flancs inclinés dissymétriques et sommets tronqués. Dans les filetages à filets triangulaires arrondis, les efforts radiaux sont importants, ce qui rend ce type de filetage sujet au grippage et au désengrènement des filets.

Ceci étant, quel que soit le type de filetage utilisé, il existe toujours, malgré l'utilisation de graisses chargées de particules, un canal de fuite dans lequel un fluide à haute pression peut circuler du fait du jeu existant entre les surfaces non en contact. Pour une charge donnée en traction, il existe un seuil de pression du fluide, au-delà duquel l'effort combiné de traction et pression provoque sur les joints filetés API un désengrènement des filetages des parties mâle et femelle en contact.

Les joints et assemblages filetés ont été perfectionnés pour éviter cela: par exemple les brevets FR 1489013, EP 488912, US 4494777 ont visé à réaliser des joints filetés tubulaires dits supérieurs ou "premium" particulièrement étanches grâce à des portées d'étanchéité métal-métal et à des butées entre éléments mâle et femelle judicieusement arrangées.

Ceci peut se faire par deux portées d'étanchéité coniques en contact interférant, la portée d'étanchéité mâle étant disposée extérieurement au-delà du filetage mâle et la portée d'étanchéité femelle étant disposée de manière correspondante sur l'élément femelle. Des butées transversales sont utilisées conjointement pour positionner les portées d'étanchéité et pour renforcer leur effet. Cependant il existe toujours un risque de démariage des cônes des portées sous l'effet d'une pression extérieure et un risque de détérioration et de séparation des portées sous les efforts de compression et de traction appliqués durant la descente des tubes dans le puits ou en service.

Après descente d'une colonne tubulaire dans un puits, on envisage de soumettre celle-ci à une expansion diamétrale, avec déformation plastique permanente. Ceci se fait par exemple à l'aide d'un boulet dont le passage est forcé à l'intérieur de la colonne: voir WO 93/25799, WO 98/00626, WO 99/06670, WO 99/35368, WO 00/61915, GB 2344606, GB 2348657. Ceci offre des potentialités très intéressantes:
- descendre une colonne de faible encombrement, qui est ensuite expansée à force;
- mettre en place de cette façon une colonne de tubes de cuvelage,
- de même, colmater in situ les trous d'un tube de cuvelage ou de production percé par la corrosion ou par le frottement des tiges de forage, ou bien descendre dans le puits des tubes de faible encombrement qui seront expansés au diamètre souhaité une fois en place.
- enfin et surtout, permettre de forer des puits de diamètre uniforme sur au minimum deux colonnes de cuvelages successives. Le cuvelage est réalisé par plusieurs colonnes de tubes tous de même diamètre, les tubes étant introduits à l'état non expansé, puis étant expansés in situ au diamètre du puits.

Il serait alors possible de diminuer fortement le nombre de tubes nécessaires pour équiper un puits, en supprimant les tubes de plus gros diamètre et de plus forte épaisseur. Le coût du puits est diminué en conséquence. Il peut même être envisagé de forer le puits directement avec la colonne de tubes de cuvelage, qui jouerait le rôle de train de tiges de forage. Mais réaliser des joints filetés qui tiennent leurs performances après cette expansion est extrêmement délicat, d'autant plus que ceci doit être fiable (tous les joints doivent tenir) et stable dans les conditions de fonctionnement.

On connaît par US 5924745 et WO 98/42947 des joints filetés tenant l'expansion. Mais il s'agit ici d'assembler des composants dits EST (expandable slotted tubings), munis de fentes longitudinales traversantes, et sujets à expansion diamétrale au fond de puits d'hydrocarbures (par passage d'un mandrin d'expansion dans ces tubes); élargies, les fentes permettent à un fluide extérieur au composant (hydrocarbure provenant du gisement) d'entrer dans le composant pour y être remonté en surface. Dans ce cas, l'étanchéité des joints n'a manifestement pas d'importance, et, étant en fond de puits, ils n'ont pas une aussi grande charge mécanique. L'invention s'intéresse à des tubes étanches par eux-mêmes et non à ce genre de composants perméables par construction.

En fait, les premières propositions d'expansion plastique des colonnes tubulaires se fondent sur des joints soudés (bobines de tubes aboutés préalablement par soudage, déroulées depuis la surface) ou encore sur des joints frottants ("slips"). Mais de tels joints ne possèdent pas les performances des joints filetés, en particulier en ce qui concerne la combinaison de la résistance mécanique, de l'étanchéité en conditions variées de service, et aussi de la possibilité de démontage/remontage plusieurs fois de suite.

Les joints filetés tubulaires classiques tels que ceux selon US 4494777 ne supportent pas l'expansion diamétrale plastique. On constate après expansion sur ces joints:
- une absence d'étanchéité (qui empêche en outre de réaliser l'expansion en poussant hydrauliquement le boulet dans la colonne);
- une flèche de l'extrémité mâle vers l'intérieur du joint qui réduit considérablement et de manière inacceptable le diamètre intérieur opérationnel de la colonne en réalisant une saillie intérieure dans l'espace défini par le diamètre intérieur opérationnel;
- éventuellement la rupture de la lèvre d'extrémité mâle par dépassement de la capacité de déformation de certaines zones particulièrement sollicitées du fait des variations d'épaisseur tout au long des éléments mâles et femelles par rapport à l'épaisseur au corps du tube.

On a cherché à réaliser un joint fileté étanche dans le but d'assembler des composants présentant eux-mêmes une structure étanche et présentant l'aptitude opérationnelle souhaitée après expansion. On a cherché à ce que le joint fileté étanche soit convenablement prémuni contre le risque de désengagement des filets.

Le document WO 2005/064219 propose une extrémité mâle pourvue d'une lèvre venant dans un logement de l'extrémité femelle, l'extrémité mâle venant en partie en saillie dans une gorge de l'extrémité femelle lors de l'expansion. La lèvre de l'extrémité femelle doit être particulièrement robuste pour résister à l'effort exercée par la lèvre de l'extrémité mâle tout en étant suffisamment longue pour éviter une perte de contact entre lesdites lèvres dûe aux déplacements axiaux provoqués par l'expansion diamétrale. Par ailleurs, le risque de désengagement des filets demeure. De plus, l'efficacité en tension de ce type de joint est très réduite du fait de la faible section critique de l'élément femelle, ce qui limite les performances mécaniques d'un tel joint. Parallèlement, pour les taux d'expansion élevés, le déplacement relatif entre l'élément mâle et l'élément femelle au niveau de la portée intérieure peut provoquer une perte de contact et le désengagement de la lèvre hors de la gorge.

Le document US 6 409 175 propose d'ajouter un élément supplémentaire d'étanchéité à proximité de la surface terminale de l'extrémité mâle. Le logement nécessaire à l'élément d'étanchéité affaiblit l'extrémité mâle par réduction de la section critique. Le risque de désengagement des filets et de déplacement radial des extrémités mâle et femelle l'une par rapport à l'autre demeure inchangé.

Le document US 2006/162937 décrit un manchon ajouté à la jonction à partir de l'extérieur. Le manchon occupe une épaisseur supplémentaire d'où une diminution du diamètre utile. L'expansion devient plus difficile au niveau du manchon ce qui nécessite une pression d'expansion accrue non souhaitable.

Le document US 2007/102927 peut être rapproché de FR 2 834 326. La section critique de l'extrémité femelle est relativement faible.

Le document WO 2006/47685 décrit une connexion filetée expansible avec des filets de longueur progressivement croissante aboutissant à un jeu nul entre les flancs à l'état vissé. Il subsiste un jeu radial entre les fonds et les sommets de filets d'où une étanchéité médiocre. Par ailleurs, l'expansion risque de recréer un jeu axial entre les flancs de filets préalablement en contact avant expansion. Le risque de fuite est donc significatif.

Le document WO 2007/16074 propose une étanchéité par contact métal-métal entre deux portions de filetage. Les filets sont de longueur axiale progressive avec jeu nul entre flancs en fin de vissage. Ce type de contact ne résiste guère à une forte expansion diamétrale. L'extrémité mâle et l'extrémité femelle tendent à se séparer en créant un espace radial en raison du retour élastique, de la déformation plastique différentielle et des contraintes résiduelles notamment. En outre, ce type de joint est très sensible aux conditions dans lesquelles est réalisée l'expansion diamétrale.

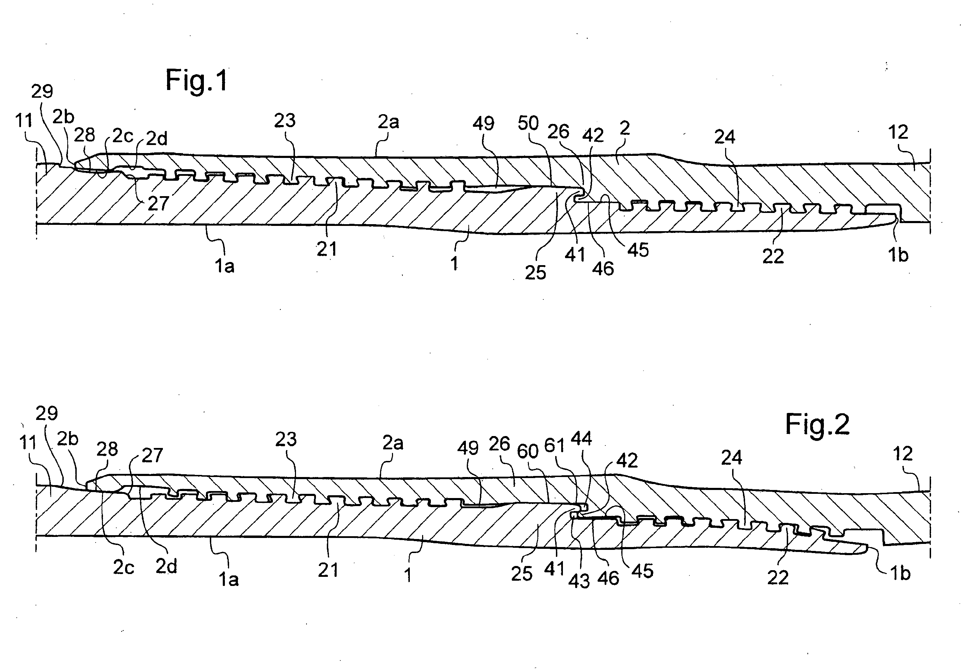

Sur la figure 1, un joint comprend un élément ou extrémité filetée mâle 1 disposé en extrémité d'un premier tube 11. L'extrémité mâle 1 est vissée en butée dans un élément ou extrémité filetée femelle 2 disposée en extrémité d'un second tube 12. Le diamètre intérieur de l'extrémité filetée mâle est ici égal au diamètre intérieur des tubes 11, 12. Le diamètre extérieur de l'extrémité filetée femelle 2 est égal au diamètre extérieur des tubes 11, 12, à titre d'exemple uniquement. Le joint est représenté sur la figure 1 à l'état simplement vissé en butée avant toute opération d'expansion diamétrale. Sur la figure 2, le joint est représenté à l'état expansé. Le second tube 12 tel que représenté est un tube de grande longueur. Ce second tube pourrait être, de manière non représentée, un manchon muni d'un côté de l'extrémité femelle 2 et de l'autre côté d'une autre extrémité femelle symétrique ou non par rapport à un plan radial et vissé à un élément mâle situé en extrémité d'un autre tube de grande longueur.

L'extrémité mâle 1 comprend un alésage 1a globalement cylindrique avec une portion tronconique au voisinage de la zone lèvre/gorge. L'extrémité mâle 1 comprend une surface terminale 1 b, ici, de forme sensiblement radiale. La surface terminale 1 b de l'extrémité mâle 1 est distante axialement de l'extrémité femelle 2. L'extrémité mâle 1 comprend une première zone filetée 21 disposée sur une surface périphérique extérieure et une deuxième zone filetée 22 également disposée sur sa surface périphérique extérieure et présentant un diamètre plus faible. De façon correspondante, l'extrémité femelle 2 comprend une troisième zone filetée 23 homologue de la première zone filetée 21 et une quatrième zone filetée 24 homologue de la deuxième zone filetée 22. A l'état vissé, les première et troisième zones filetées 21 et 23 sont en prise et les deuxième et quatrième zones filetées 22 et 24 sont en prise. Chaque zone filetée, 21, 22, 23, 24 est munie de filets.

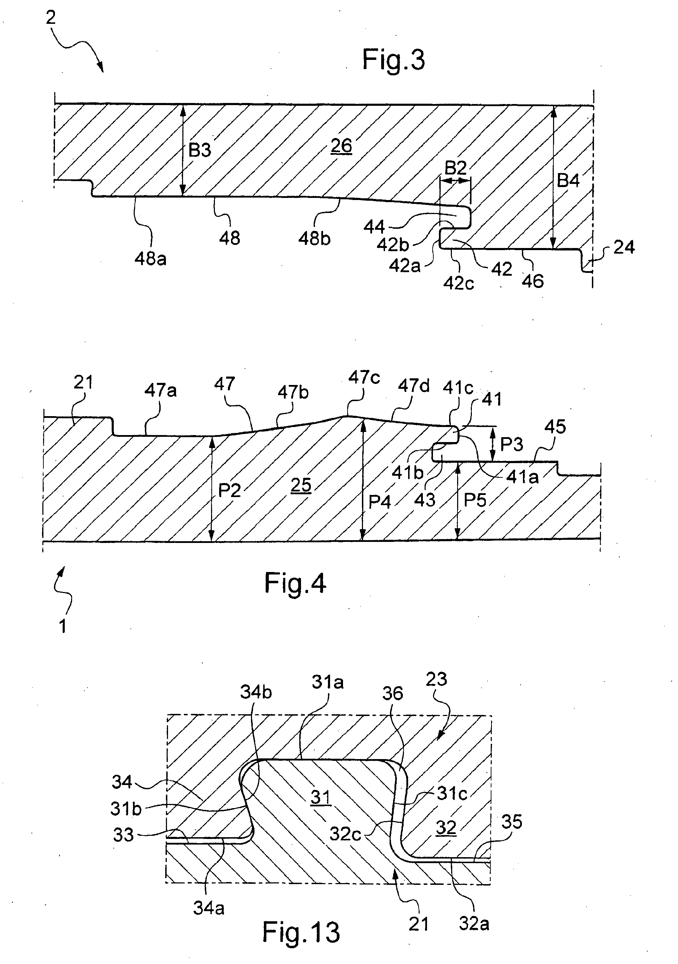

Dans le mode de réalisation représenté, les filets sont autoaccrochants radialement à angles négatifs pour obtenir l'effet anti saut de filet, voir aussi figure 13. En d'autres termes, au moins une partie des filets possède des dents plus larges au voisinage de leur sommet qu'au voisinage des creux.

La figure 13 montre, à l'état vissé, des filets en queue d'aronde avec des flancs d'engagements et des flancs porteurs formant un angle aigu par rapport au sommet correspondant. Plus particulièrement, une dent 31 de la zone filetée 21 possède un sommet 31a de forme sensiblement cylindrique, un flanc porteur 31b et un flanc d'engagement 31c. La dent 31 est entourée par des creux 33 et 35. La dent 31 est en prise dans la zone filetée 23 à l'état vissé, plus précisément en saillie dans un creux 36 entre des dents 32 et 34. Le sommet 31 a de la dent 31 est en contact avec le fond du creux 36. Les dents 32, 34 de la zone filetée femelle 22 sont chacune pourvues d'un sommet 32a, 34a à faible distance radiale du fond des creux 33 et 35 correspondants de la zone filetée mâle 21. Les zones filetées 21 et 23 sont tronconiques. Le diamètre du creux 33 est supérieur au diamètre du creux 35. Le diamètre de la dent 34 est supérieur au diamètre de la dent 32.

Les flancs porteurs 31b de la dent 31 et 34b de la dent 34 sont en contact mutuel. Les flancs d'engagement 31 c de la dent 31 et 32c de la dent 32 sont situés à une faible distance axiale. Toutefois, dans une variante, les filetages peuvent être du type à interférence sur les flancs d'engagement. Dans ce cas, les flancs d'engagement 31c et 32c sont en contact à l'état vissé.

Revenant aux figures 1 et 2, à l'état vissé et à l'état expansé, la deuxième zone filetée 22 de l'extrémité mâle 1 peut s'étendre jusqu'à proximité de la surface terminale 1 b ou en être séparée par une surface cylindrique ou légèrement tronconique. Entre les zones filetées 21 et 22, l'extrémité mâle 1 comprend une région d'insertion mâle 25 en contact avec une région d'insertion femelle 26 ménagée sur l'extrémité femelle 2 entre les troisième et quatrième zones filetées 23 et 24. Au-delà de la première zone filetée 21 et en direction du premier tube 11, l'extrémité mâle 1 comprend un épaulement 27, par exemple tronconique, suivi d'une portion sensiblement tronconique 28 d'étanchéité se raccordant à une surface extérieure du premier tube 11 par un deuxième épaulement 29. L'extrémité femelle 2 comprend une surface extérieure 2a de révolution et une surface terminale 2b, ici de forme arrondie, distante de l'épaulement 29 à l'état vissé. Entre la surface terminale 2b et la troisième zone filetée 23, l'extrémité femelle 2 comprend une surface intérieure 2c en contact avec la surface tronconique 28, à l'état expansé et éventuellement à l'état vissé. La surface intérieure 2c voisine de la surface terminale 2b peut être de forme cylindrique ou, de préférence bombée, par exemple en arc de cercle.

La surface intérieure 2c peut se raccorder directement à la troisième zone filetée 23 de l'extrémité femelle 2 ou par l'intermédiaire d'une zone concave 2d sensiblement en regard de l'épaulement 27 de l'extrémité mâle 1 à l'état vissé et à l'état expansé. La concavité 2d procure de la souplesse pour conserver un contact après expansion entre la surface intérieure 2c et la surface tronconique 28 et éviter que la surface terminale 2c ne se relève radialement.

Les régions d'insertion mâle 25 et femelle 26 sont visibles plus en détail sur les figures 3 et 4. La région d'insertion mâle 25 comprend une première languette 41. La région d'insertion femelle 26 comprend une deuxième languette 42. Les languettes 41 et 42 sont annulaires. Chaque languette 41,42 comprend une extrémité libre formant une face saillante 41a, 42a de butée. Chaque languette 41, 42 comprend une surface de petit diamètre 41b, 42c cylindrique ou légèrement tronconique et une surface de grand diamètre 41c, 42b, cylindrique ou légèrement tronconique. La surface de grand diamètre 41c est tangente à une première surface 47 de grand diamètre de la région d'insertion mâle 25.

Chaque région d'insertion mâle 25, femelle 26 comprend respectivement une première concavité 43 ou feuillure et une deuxième concavité 44 ou feuillure, adjacente à la première languette 41 et à la deuxième languette 42. La surface de petit diamètre 41 b de la première languette 41 délimite la première concavité 43 en formant sa paroi extérieure. La paroi de petit diamètre de la concavité 43 est ici formée par une surface sensiblement cylindrique 45 s'étendant dans ladite première concavité 43 et jusqu'à la deuxième zone filetée 22. Le fond de la concavité 43 peut être de forme sensiblement radiale. La surface de grand diamètre 42b de la deuxième languette 42 délimite radialement vers l'intérieur la deuxième concavité 44 en en formant la paroi de petit diamètre. La paroi de grand diamètre de la deuxième concavité 44 est formée par une deuxième surface 48 de la région d'insertion femelle 26, localement de forme légèrement tronconique ou arrondie. Le fond de la deuxième concavité 44 présente une forme sensiblement radiale. La région d'insertion femelle 26 présente une surface 46 tangente avec la surface de petit diamètre 42c de la deuxième languette 42 et s'étendant entre ladite deuxième languette 42 et la quatrième zone filetée 24 de l'extrémité femelle 2. A l'état vissé, les surfaces 45 de la région d'insertion mâle 25 et 46 de la région d'insertion femelle 26 sont disposées axialement au même niveau et peuvent être en contact ou séparées par un léger jeu radial.

De façon générale, la première languette 41 et la première concavité 43 présentent un profil en S. La deuxième languette 42 et la deuxième concavité 44 présentent un profil en S inversé de dimensions correspondantes de telle sorte qu'à l'état vissé, la première languette 41 est en saillie dans la deuxième concavité 44 et la deuxième languette 42 est en saillie dans la première concavité 43. A l'état vissé, la surface de petit diamètre 41 b de la première languette 41 est en contact avec la surface de grand diamètre 42b de la deuxième languette 42. A l'état expansé, un léger retrait axial peut se produire, tandis que ledit contact entre les première et deuxième languettes 41 et 42 est conservé.

La première surface 47 présente un diamètre supérieur au diamètre de la surface 45. La surface extérieure 47 s'étend entre la première zone filetée 21 et la première languette 41. La première surface 47 comprend, dans le mode de réalisation des figures 3 et 4, une première portion sensiblement cylindrique 47a voisine de la première zone filetée 21, une deuxième portion 47b sensiblement tronconique de diamètre croissant à partir de la première portion 47a, un sommet 47c arrondi, et une troisième portion 47d de forme sensiblement tronconique et de diamètre décroissant en s'éloignant de la première zone filetée 21. La troisième portion 47d rejoint la surface de grand diamètre 41c de la première languette 41 de façon tangente.

En regard de la première surface 47 de la région d'insertion mâle 25, la deuxième surface 48 s'étend entre la troisième zone filetée 23 et la deuxième concavité 44. La deuxième surface 48 comprend, avant expansion, une première portion 48a voisine de la troisième zone filetée 23 et de forme sensiblement cylindrique, et une deuxième portion 48b prolongeant la première portion 48a jusqu'à la deuxième concavité 44 et présentant une forme en arc de cercle.

Comme on le voit sur la figure 1, les première et deuxième surfaces 47 et 48 laissent subsister entre elles, à l'état vissé, un espace annulaire comprenant une zone de forte dimension radiale 49 du côté des première et troisième zones filetées 21 et 23 et une zone 50 de dimension radiale faible ou nulle du côté de la première languette 41 et de la deuxième concavité 44. Pour des raisons d'échelle, la zone 50 est visible sur la figure 1 comme présentant une dimension radiale nulle. Toutefois, la zone 50 peut présenter une dimension radiale nulle au voisinage du sommet 47c de la première surface 47 et une dimension radiale faible mais non nulle en dehors du sommet 47c. Alternativement, la zone 50 de faible dimension radiale est continue y compris à proximité du sommet 47c.

La première surface 47 présente une forme générale bombée. Le sommet 47c de la première surface 47 est situé entre le tiers et les deux tiers de la longueur de ladite première surface 47 en partant de la première zone filetée 21, de préférence entre la moitié et les deux tiers de sa longueur. La troisième portion 47d est de diamètre supérieur au diamètre de la première portion 47a.

A l'état expansé illustré sur la figue 2, la zone de forte dimension radiale 49 subsiste sur une longueur réduite et avec une dimension radiale également réduite. Un contact métal-métal 60 résulte de l'écrasement du sommet 47c de la première surface 47 contre la portion arrondie 48b de la deuxième surface 48 de la région d'insertion femelle 26.

Les première et deuxième languettes 41 et 42 se retirent légèrement des deuxième et première concavités 44 et 43 respectivement. Il en résulte une distance axiale entre la face en saillie 41 a de la première languette 41 et le fond de la deuxième concavité 44, et de la face en saillie 42a de la deuxième languette 42 par rapport au fond de la première concavité 43. La première languette 41 pivote légèrement dans le sens horaire. En d'autres termes, la première languette 41 tend à voir son diamètre diminuer, en particulier à proximité de sa face en saillie 41a. Un second contact métal-métal 61 est créé à l'interface entre la surface de petit diamètre 41b de la première languette 41 et la surface de grand diamètre 42b de la deuxième languette 42.

Le dimensionnement du joint est particulièrement complexe. Dans ce mode de réalisation, les dimensions suivantes, prises individuellement ou non, sont bien adaptées:
- longueur de la première surface 47 de l'extrémité mâle 1 comprise entre 150 et 175 % de l'épaisseur du composant tubulaire en section courante ;
- longueur de la deuxième surface 48 de l'extrémité femelle 2 comprise entre 145 et 170 % de l'épaisseur du composant tubulaire en section courante ;
- longueur de la deuxième concavité 44 comprise entre 16 et 24 % de l'épaisseur du composant tubulaire en section courante ;
- épaisseur de l'extrémité mâle 1 au niveau de la zone de forte dimension radiale de l'espace annulaire comprise entre 66 et 76 % de l'épaisseur du composant tubulaire en section courante ;
- épaisseur de l'extrémité mâle 1 au niveau de la zone de faible dimension radiale de l'espace annulaire comprise entre 75 et 85 % de l'épaisseur du composant tubulaire en section courante ;
- épaisseur de l'extrémité femelle 2 au niveau de la zone de forte dimension radiale de l'espace annulaire comprise entre 45 et 55 % de l'épaisseur du composant tubulaire en section courante ;
- épaisseur de l'extrémité mâle 1 entre la première languette et la deuxième zone filetée comprise entre 50 et 55 % de l'épaisseur du composant tubulaire en section courante ;
- épaisseur de l'extrémité femelle 2 entre la deuxième languette et la quatrième zone filetée comprise entre 62 et 76 % de l'épaisseur du composant tubulaire en section courante ;
- dimension radiale de la première languette 41 et de la première concavité 43 comprise entre 22 et 27 % de l'épaisseur du composant tubulaire en section courante ;
- dimension radiale de la deuxième languette 42 comprise entre 10 et 15 % de l'épaisseur du composant tubulaire en section courante ;
- dimension radiale de la deuxième concavité 44 comprise entre 10 et 15 % de l'épaisseur du composant tubulaire en section courante.

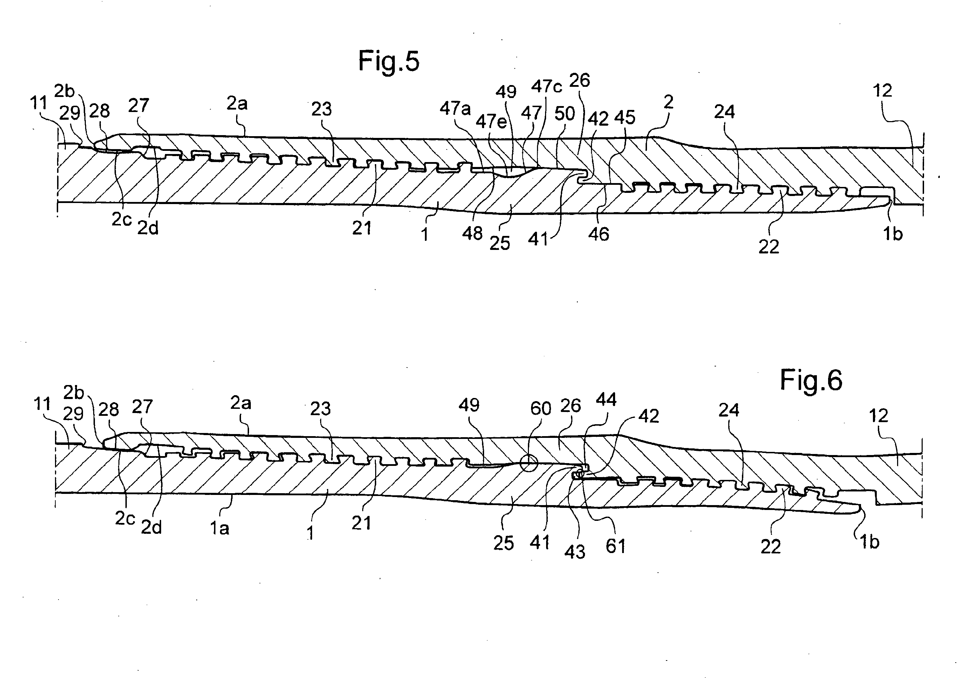

Dans le mode de réalisation illustré sur les figures 5 et 6, les références des éléments semblables au mode de réalisation précédent ont été conservées. La deuxième surface 48 de la région d'insertion femelle 26 de l'extrémité femelle 2 est semblable au mode de réalisation précédent. La première surface 47 de la région d'insertion mâle 25 de l'extrémité mâle 1 comprend une gorge annulaire 47e formant en section axiale un creux arrondi 47e. La gorge 47e est située entre la première portion 47a et le sommet 47c. En d'autres termes, la gorge 47e remplace, dans ce mode de réalisation, la deuxième portion tronconique 47b de la figure 4. La gorge 47e permet d'une part d'augmenter la dimension radiale de l'espace annulaire dans sa zone de forte dimension radiale 49 et d'autre part, de faciliter l'opération d'expansion par diminution de l'épaisseur subsistante de l'extrémité mâle 1. L'effort nécessaire à l'expansion s'en trouve réduit. La gorge 47e a une profondeur comprise entre 6 et 13% de l'épaisseur du composant tubulaire en section courante, i.e. entre les extrémités.

En outre, la gorge 47e en augmentant le déplacement radial possible de la matière constituant l'extrémité mâle 1 radialement vers l'extérieur avant contact avec la deuxième surface 48 de la région d'insertion femelle 26 de l'extrémité femelle 2, permet d'augmenter le phénomène de pivotement de la première languette 41 radialement vers l'intérieur. Ce phénomène correspond à un pivotement de la languette 41 autour d'un axe géométrique situé approximativement vers le sommet 47c ou dans une zone située dans l'épaisseur de la région d'insertion mâle 25 et axialement sensiblement au niveau du sommet 47c. A l'état expansé illustré sur la figure 6, la zone de forte dimension radiale 49 de l'espace annulaire subsiste en partie. Un contact métal-métal 60 est créé sensiblement au niveau du sommet 47c notamment dans le cercle représenté sur la figure 6. Un contact métal-métal supplémentaire 61 est crée entre les languettes 41 et 42 dans la zone cerclée de la figure 6.

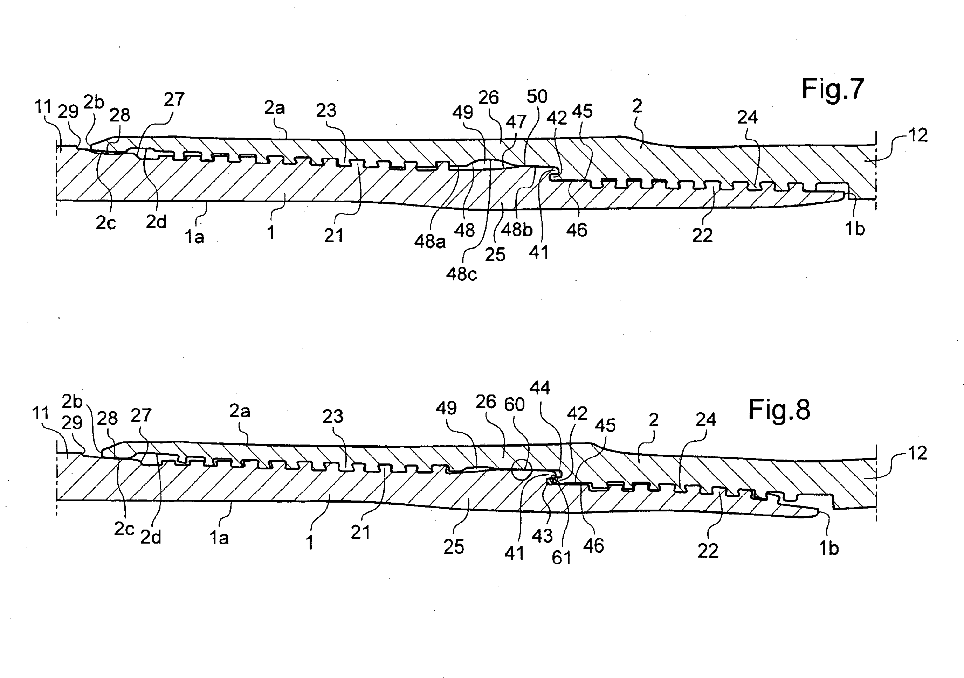

Dans le mode de réalisation des figures 7 et 8, l'extrémité mâle 1 est semblable à celle du premier mode de réalisation. L'extrémité femelle 2 est pourvue d'une gorge 48c ménagée dans la région d'insertion femelle 26 entre la première portion 48a sensiblement cylindrique et la deuxième région 48b ici sensiblement tronconique. La gorge 48c est annulaire et arrondie en section axiale. La gorge 48c permet d'augmenter la dimension radiale de la zone de forte dimension radiale 49 par rapport au premier mode de réalisation. Le déplacement radial vers l'extérieur de la région d'insertion mâle 25 lors de l'expansion en est facilité, la prise de contact de la première surface 47 avec la gorge 48c étant retardée par rapport au premier mode de réalisation. Toutefois, le basculement de la première languette 41 peut être légèrement inférieur à celui observé dans le mode de réalisation des figures 5 et 6. La gorge 48c a une profondeur comprise entre 6 et 13% de l'épaisseur du composant tubulaire en section courante.

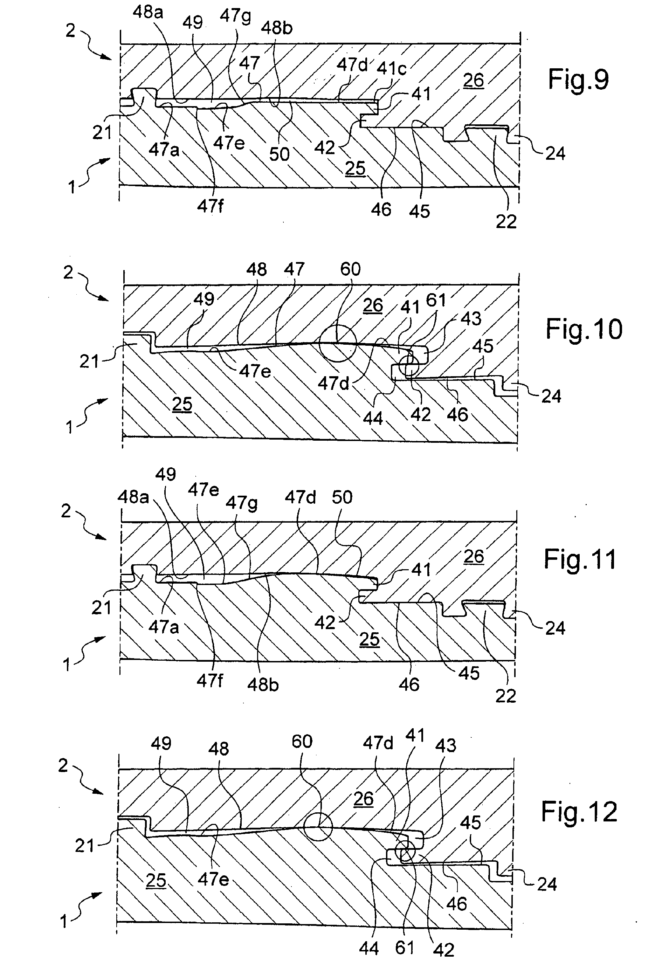

Dans le mode de réalisation des figures 9 et 10, l'espace annulaire comprenant la zone de forte dimension radiale 49 et la zone de faible dimension radiale 50 est continu. En d'autres termes, la première surface 47 et la deuxième surface 48 sont radialement distantes à l'état vissé. La première surface 47 comprend une première portion 47a située dans le prolongement de la zone filetée 21, par exemple de faible conicité, facilitant le déplacement des outils de découpe. Puis, en s'éloignant de la zone filetée 21, la première surface 47 comprend un léger épaulement 47f délimitant la gorge 47e. De l'autre côté, la gorge 47e est délimitée par une portion tronconique 47g se raccordant à la portion de grand diamètre 47d tangente à la surface de grand diamètre 41c de la première languette 41. La portion de grand diamètre 47d peut être cylindrique. La deuxième surface 48 de la région d'insertion 26 de l'extrémité femelle 2 comprend une première portion 48a sensiblement cylindrique et une deuxième portion 48b très légèrement bombée vers l'extérieur, par exemple en arc de cercle.

A l'état expansé, illustré sur la figure 10, la zone de forte dimension radiale 49 subsiste avec une dimension radiale réduite. La gorge 47e tend à être comblée par le déplacement de la matière de la région d'insertion mâle 25 radialement vers l'extérieur. La portion de grand diamètre 47d de la première surface 47 vient se déformer en arc de cercle vers l'extérieur, en contact avec la deuxième portion 48b de la deuxième surface 48 et former un contact métal-métal 60. Un contact métal-métal supplémentaire 61 est formé par le déplacement radialement vers l'intérieur de la languette 41 interférant diamétralement avec la deuxième languette 42.

Dans le mode de réalisation des figures 11 et 12, la première surface 47 se distingue du mode de réalisation précédent en ce que la portion de grand diamètre 47d est bombée en arc de cercle en coupe axiale et vient en contact au vissage avec la deuxième portion 48b de la deuxième surface 48 de la région d'insertion femelle 26. En d'autres termes, la zone de faible dimension radiale 50 est à dimension radiale nulle. La deuxième surface 48 est analogue à celle du mode de réalisation précédent.

De façon générale, lors de l'expansion diamétrale, un contact métal-métal 60 est créé dans la zone de la portion de grand diamètre 47d, à distance de la première languette 41. En effet, la première languette 41 tend à se déplacer radialement vers l'intérieur relativement à la deuxième languette 42. Il convient de comprendre que ce déplacement est relatif en ce sens que, lors de l'expansion diamétrale, les languettes 41 et 42 se déplacent toutes deux radialement vers l'extérieur et que la languette 41 tend à se déplacer moins que la languette 42, d'où un déplacement radial relatif permettant de créer l'étanchéité par contact métal-métal supplémentaire 61 entre les surfaces en regard des première et deuxième languettes 41 et 42. Ces déplacements sont bien adaptés à des taux d'expansion élevés supérieurs à 15%, de préférence supérieurs à 20%.

## Revendications

1. Joint fileté expansible utilisé dans l'exploration ou l'exploitation des puits d'hydrocarbures, comprenant un premier composant tubulaire comportant une extrémité mâle (1) comprenant une première et une deuxième zones filetées (21, 22) disposées sur sa surface périphérique extérieure et une région d'insertion (25) ménagée entre lesdites première et deuxième zones filetées (21,22), la région d'insertion étant pourvue d'une première languette (41) annulaire comprenant une face de butée (41a) saillante, et d'une première concavité (43) adjacente à la première languette et en retrait sur celle-ci ; un second composant tubulaire comportant une extrémité femelle (2) comprenant une troisième et une quatrième zones filetées (23, 24) disposées sur sa surface périphérique intérieure et une région d'insertion (26) ménagée entre lesdites troisième et quatrième zones filetées (23,24), la région d'insertion étant pourvue d'une deuxième languette (42) annulaire comprenant une face de butée (42a) saillante, et d'une deuxième concavité (44) adjacente à la deuxième languette et en retrait sur celle-ci, les première et deuxième zones filetées de l'extrémité mâle étant homologues des troisième et quatrième zones filetées de l'extrémité femelle pour être vissées avec, les zones filetées (21,22,23,24) comportant des filets respectivement mâle et femelle; les première et deuxième languettes (41, 42) étant engagées respectivement dans les deuxième et première concavités (44, 43) à l'état vissé, la face de butée d'au moins l'une des première et deuxième languettes étant en contact avec respectivement la deuxième ou première concavité, l'extrémité mâle (1) comprenant une première surface (47) entre la première zone filetée et la première languette et l'extrémité femelle comprenant une deuxième surface (48) entre la troisième zone filetée et la deuxième concavité, **caractérisé en ce que** lesdites première et deuxième surfaces (47, 48) définissent, à l'état vissé, un espace annulaire comprenant une zone de forte dimension radiale (49) du côté des première et troisième zones filetées et une zone de faible dimension radiale (50) du côté de la première languette et de la deuxième concavité apte à former, après expansion une étanchéité par contact métal-métal (60), la première languette (41) alors prenant appui sur la seconde languette (42).

2. Joint fileté selon la revendication 1, dans lequel une surface de l'extrémité mâle disposée entre la première languette (41) et la première concavité (43) et une surface de l'extrémité femelle disposée entre la deuxième languette (42) et la deuxième concavité (44) sont en contact à l'état vissé.

3. Joint fileté selon l'une des revendications précédentes, dans lequel la première surface (47) de l'extrémité mâle (1) présente un diamètre maximal situé entre 1/3 et 2/3 de sa longueur.

4. Joint fileté selon l'une des revendications précédentes, dans lequel la première surface (47) de l'extrémité mâle (1) présente un diamètre au voisinage de la première languette (41) supérieur au diamètre au voisinage de la première zone filetée (21).

5. Joint fileté selon l'une des revendications précédentes, dans lequel l'étanchéité par contact métal-métal est réalisée au moyen d'une portion bombée au voisinage de la première languette de l'extrémité mâle.

6. Joint fileté selon l'une des revendications précédentes, dans lequel la zone de forte dimension radiale (49) du côté des première et troisième zones filetées est définie entre une surface intérieure tronconique et une surface extérieure en arc de cercle, entre une surface intérieure en arc de cercle et une surface extérieure tronconique, ou entre deux surfaces en arc de cercle.

7. Joint fileté selon l'une quelconque des revendications précédentes, dans lequel la zone de faible dimension radiale (50) du côté de la première languette et de la deuxième concavité présente une dimension radiale nulle.

8. Joint fileté selon l'une des revendications précédentes, dans lequel la première surface (47) de l'extrémité mâle (1) et/ou la deuxième surface (48) de l'extrémité femelle (2) présente une gorge annulaire (47e, 48c) au voisinage de la première zone filetée.

9. Joint fileté selon la revendication précédente, dans lequel la gorge (47e, 48c) a une profondeur comprise entre 6 et 13% de l'épaisseur du composant tubulaire en section courante.

10. Joint fileté selon l'une des revendications précédentes, dans lequel les première et troisième zones filetées (21,23) et/ou les deuxième et quatrième zones filetées (22, 24) comprennent des filets radialement autoaccrochants, de préférence en queue d'aronde.

11. Joint fileté selon l'une des revendications précédentes, dans lequel la longueur de la première surface (47) de l'extrémité mâle (1) est comprise entre 150 et 175 % de l'épaisseur du composant tubulaire en section courante, la longueur de la deuxième surface (48) de l'extrémité femelle (2) est comprise entre 145 et 170 % de l'épaisseur du composant tubulaire en section courante, et la longueur de la deuxième concavité (44) est comprise entre 16 et 24 % de l'épaisseur du composant tubulaire en section courante.

12. Joint fileté selon l'une des revendications précédentes, dans lequel l'épaisseur de l'extrémité mâle (1) au niveau de la zone de forte dimension radiale de l'espace annulaire est comprise entre 66 et 76 % de l'épaisseur du composant tubulaire en section courante, l'épaisseur de l'extrémité mâle (1) au niveau de la zone de faible dimension radiale de l'espace annulaire est comprise entre 75 et 85 % de l'épaisseur du composant tubulaire en section courante, et l'épaisseur de l'extrémité femelle (2) au niveau de la zone de forte dimension radiale de l'espace annulaire est comprise entre 45 et 55 % de l'épaisseur du composant tubulaire en section courante.

13. Joint fileté selon l'une des revendications précédentes, dans lequel l'épaisseur de l'extrémité mâle (1) entre la première languette et la deuxième zone filetée est comprise entre 50 et 55 % de l'épaisseur du composant tubulaire en section courante, et l'épaisseur de l'extrémité femelle (2) entre la deuxième languette et la quatrième zone filetée est comprise entre 62 et 76 % de l'épaisseur du composant tubulaire en section courante.

14. Joint fileté selon l'une des revendications précédentes, dans lequel la dimension radiale de la première languette (41) et de la première concavité (43) est comprise entre 22 et 27 % de l'épaisseur du composant tubulaire en section courante, la dimension radiale de la deuxième languette (42) est comprise entre 10 et 15 % de l'épaisseur du composant tubulaire en section courante, et la dimension radiale de la deuxième concavité (44) est comprise entre 10 et 15 % de l'épaisseur du composant tubulaire en section courante.

15. Procédé de réalisation d'un joint fileté étanche, dans lequel on part d'un joint fileté selon l'une des revendications précédentes, dans lequel on fait subir audit joint fileté une expansion diamétrale dans le domaine des déformations plastiques à l'aide d'un boulet d'expansion de diamètre supérieur au diamètre intérieur des composants tubulaires qui est déplacé axialement dans le joint, ledit espace annulaire étant dimensionné pour que la première surface (47) subisse un déplacement radial vers la deuxième surface (48) lors de l'expansion diamétrale de façon que lesdites première (47) et deuxième (48) surfaces interfèrent radialement formant une étanchéité métal-métal tout en laissant subsister la zone de forte dimension radiale (49) de l'espace annulaire.

16. Procédé selon la revendication précédente, dans lequel la première surface (47) subit un déplacement axial en direction de la première languette (41), la première languette (41) subissant un basculement en direction de la deuxième languette (42) de façon qu'une surface intérieure de la première languette (41) et une surface extérieure de la deuxième languette (42) interfèrent radialement formant une étanchéité métal-métal.

17. Procédé selon l'une des deux revendications précédentes, dans lequel le taux d'expansion est supérieur à 15%, préférablement 20%.

## Patentansprüche

1. Expandierbare Schraubverbindung, die verwendet wird bei der Erkundung oder bei dem Betrieb von Kohlenwasserstoffbrunnen, mit einer ersten rohrförmigen Komponente mit einem männlichen Ende (1), welches einen ersten und einen zweiten Gewindebereich (21, 22) aufweist, die auf seiner äußeren Umfangsfläche angeordnet sind, und einen Einfügebereich (25), der zwischen dem ersten und zweiten Gewindebereich (21, 22) vorgesehen ist, wobei der Einfügebereich mit einer ersten ringförmigen Zunge (41) versehen ist, die eine vorstehende Anschlagsfläche (41a) aufweist, und mit einer ersten zur ersten Zunge benachbarten Vertiefung (43), die gegenüber der Zunge zurückspringt, und mit einer zweiten rohrförmigen Komponente, die ein weibliches Ende (2) aufweist, mit einem dritten und einem vierten Gewindebereich (23, 24), die auf seiner inneren Umfangsfläche angeordnet sind, und einen Einfügebereich (26), der zwischen dem dritten und dem vierten Gewindebereich (23, 24) vorgesehen ist, wobei der Einfügebereich mit einer zweiten ringförmigen Zunge (42) versehen ist, die eine vorstehende Anschlagsfläche (42a) aufweist, und eine zweite zur zweiten Zunge benachbarte Vertiefung (44), die gegenüber der Zunge zurückspringt, wobei der erste und der zweite Gewindebereich des männlichen Endes homolog zu den dritten und vierten Gewindebereichen des weiblichen Endes sind, um mit diesen verschraubt zu werden, wobei die Gewindebereiche (21, 22, 23, 24) das männliche bzw. das weibliche Gewinde aufweisen, wobei die erste und die zweite Zunge (41, 42) in die zweite und erste Vertiefung (44, 43) im verschraubten Zustand eingefügt sind, wobei die Anschlagsfläche mindestens einer der ersten und zweiten Zunge in Kontakt mit der zweiten oder ersten Vertiefung ist, wobei das männliche Ende (1) eine erste Fläche (47) zwischen dem ersten Gewindebereich und der ersten Zunge aufweist, und das weibliche Ende eine zweite Fläche (48) zwischen dem dritten Gewindebereich und der zweiten Vertiefung aufweist,
**dadurch gekennzeichnet, dass** die erste und die zweite Fläche (47, 48) im verschraubten Zustand einen Ringraum definieren, der einen Bereich großer radialer Dicke (49) auf der Seite des ersten und des dritten Gewindebereichs und einen Bereich mit kleinen radialen Abmessungen (50) auf der Seite der ersten Zunge und der zweiten Vertiefung aufweist, die dazu in der Lage ist, nach einer Expansion eine Dichtheit durch Kontakt Metall-auf-Metall (60) herzustellen, wobei die erste Zunge (41) auf der zweiten Zunge (42) aufliegt.

2. Schraubverbindung nach Anspruch 1, bei der die Fläche des männlichen Endes, die zwischen der ersten Zunge (41) und der ersten Vertiefung (43) angeordnet ist, und eine Fläche des weiblichen Endes, die zwischen der zweiten Zunge (42) und der zweiten Vertiefung (44) angeordnet ist, im verschraubten Zustand in Kontakt miteinander stehen.

3. Schraubverbindung nach einem der vorstehenden Ansprüche, bei der die erste Fläche (47) des männlichen Endes (1) einen maximalen Durchmesser aufweist, der zwischen 1/3 und 2/3 ihrer Länge liegt.

4. Schraubverbindung nach einem der vorstehenden Ansprüche, bei der die erste Fläche (47) des männlichen Endes (1) einen Durchmesser in der Nähe der ersten Zunge (41) aufweist, der größer ist als der Durchmesser in der Nähe des ersten Gewindebereichs (21).

5. Schraubverbindung nach einem der vorstehenden Ansprüche, bei dem die Dichtheit durch Metall-auf-Metall-Kontakt hergestellt wird durch einen gewölbten Abschnitt in der Nähe der ersten Zunge des männlichen Endes.

6. Schraubverbindung nach einem der vorstehenden Ansprüche, bei der der Abschnitt mit großer radialer Dicke (49) auf der Seite der ersten und dritten Gewindebereiche definiert ist zwischen einer kegelstumpfförmigen Innenfläche und einer kreisbogenförmigen Außenfläche, zwischen einer kreisbogenförmigen Innenfläche und einer kegelstumpfförmigen Außenfläche, oder zwischen zwei kreisbogenförmigen Flächen.

7. Schraubverbindung nach einem der vorstehenden Ansprüche, bei der der Bereich mit geringen radialen Abmessungen (50) auf der Seite der ersten Zunge und der zweiten Vertiefung eine radiale Abmessung von Null aufweist.

8. Schraubverbindung nach einem der vorstehenden Ansprüche, bei der die erste Fläche (47) des männlichen Endes (1) und/oder die zweite Fläche (48) des weiblichen Endes (2) eine Ringnut (47e, 48c) in der Nähe des ersten Gewindebereichs aufweisen.

9. Schraubverbindung nach einem der vorstehenden Ansprüche, bei der die Nut (47e, 48c) eine Tiefe aufweist, die zwischen 6 und 13 % der Dicke der Rohrkomponente in deren Verlauf beträgt.

10. Schraubverbindung nach einem der vorstehenden Ansprüche, bei der der erste und der dritte Gewindebereich (21, 23) und/oder der zweite und der vierte Gewindebereich (22, 24) Gewinde aufweisen, die radial selbstsichernd sind, vorzugsweise in Schwalbenschwanzform.

11. Schraubverbindung nach einem der vorstehenden Ansprüche, bei der die Länge der ersten Fläche (47) des männlichen Endes (1) zwischen 150 und 175 % der Dicke der rohrförmigen Komponente in ihrem Verlauf beträgt, die Länge der zweiten Fläche (48) des weiblichen Endes (2) zwischen 145 und 170 % der Dicke der rohrförmigen Komponenten in ihrem Verlauf beträgt, und die Länge der zweiten Vertiefung (44) zwischen 16 und 24 % der Dicke der rohrförmigen Komponente in ihrem Verlauf beträgt.

12. Schraubverbindung nach einem der vorstehenden Ansprüche, bei der die Dicke des männlichen Endes (1) auf der Höhe des Bereichs mit großer radialer Dicke des ringförmigen Raums zwischen 66 und 76 % der Dicke der rohrförmigen Komponente in ihrem Verlauf beträgt, die Dicke des männlichen Endes (1) auf der Höhe des Bereichs mit geringen radialen Abmessungen des ringförmigen Raums zwischen 75 und 85 % der Dicke der rohrförmigen Komponente in ihrem Verlauf beträgt, und die Dicke des weiblichen Endes (2) auf der Höhe des Bereichs mit großer radialer Dicke des ringförmigen Raums zwischen 45 und 55 % der Dicke der rohrförmigen Komponente in ihrem Verlauf beträgt.

13. Schraubverbindung nach einem der vorstehenden Ansprüche, bei der die Dicke des männlichen Endes (1) zwischen der ersten Zunge und dem zweiten Gewindebereich zwischen 50 und 55 % der Dicke der rohrförmigen Komponente in ihrem Verlauf beträgt, und die Dicke des weiblichen Endes (2) zwischen der zweiten Zunge und dem vierten Gewindebereich zwischen 62 und 76 % der Dicke der rohrförmigen Komponente in ihrem Verlauf beträgt.

14. Schraubverbindung nach einem der vorstehenden Ansprüche, bei der die radiale Abmessung der ersten Zunge (41) und der ersten Vertiefung (43) zwischen 22 und 27 % der Dicke der rohrförmigen Komponente in ihrem Verlauf beträgt, die radiale Abmessung der zweiten Zunge (42) zwischen 10 und 15 % der Dicke der rohrförmigen Komponente in ihrem Verlauf beträgt, und die radiale Abmessung der zweiten Vertiefung (44) zwischen 10 und 15 % der Dicke der rohrförmigen Komponente in ihrem Verlauf beträgt.

15. Verfahren zur Herstellung einer dichten Schraubverbindung, bei dem man von einer Schraubverbindung nach einem der vorstehenden Ansprüche ausgeht, bei dem die Schraubverbindung einer diametralen Expansion im Bereich der plastischen Verformungen mit Hilfe einer Dehnkugel mit einem Durchmesser, der größer ist als der Innendurchmesser der rohrförmigen Komponenten, die axial in der Verbindung bewegt wird, unterzogen wird, wobei der ringförmige Raum so dimensioniert ist, dass die erste Fläche (47) eine Radialverschiebung zur zweiten Fläche (48) während der diametralen Dehnung erfährt, derart, dass die erste (47) und die zweite (48) Fläche radial miteinander in Eingriff stehen, um eine Dichtung Metall-auf-Metall zu bilden, wobei der Bereich mit großer radialer Dicke (49) des ringförmigen Raums beibehalten wird.

16. Verfahren nach dem vorstehenden Anspruch, bei dem die erste Fläche (47) eine Axialverschiebung in Richtung der ersten Zunge (41) erfährt, die erste Zunge (41) ein Verkippen in Richtung auf die zweite Zunge (42) erfährt, derart, dass eine untere Fläche der ersten Zunge (41) und eine äußere Fläche der zweiten Zunge (42) radial miteinander in Eingriff stehen, um eine Metall-auf-Metall-Dichtung zu bilden.

17. Verfahren nach einem der beiden vorstehenden Ansprüche, bei dem der Dehnungsgrad größer als 15 % ist, vorzugsweise 20 %.

## Claims

1. An expandable threaded connection used in exploration or working of hydrocarbon wells, comprising a first tubular component comprising a male end (1) comprising a first and a second threaded zone (21, 22) disposed on its external peripheral surface and an insertion region (25) provided between said first and second threaded zones (21, 22), the insertion region being provided with a first annular tongue (41) comprising a prominent abutment face (41a), and a first concavity (43) adjacent to the first tongue and set back therefrom; a second tubular component comprising a female end (2) comprising a third and a fourth threaded zone (23, 24) disposed on its internal peripheral surface and an insertion region (26) provided between said third and fourth threaded zones (23, 24), the insertion region being provided with a second annular tongue (42) comprising a prominent abutment face (42a), and a second concavity (44) adjacent to the second tongue and set back therefrom, the first and second threaded zones of the male end matching the third and fourth threaded zones of the female end for makeup together, the threaded zones (21, 22, 23, 24) comprising respectively male and female threads; the first and second tongues (41, 42) being respectively engaged in the second and first concavities (44, 43) in the made up condition, the abutment face of at least one of the first and second tongues being in contact with respectively the second or first concavity, the male end (1) comprising a first surface (47) between the first threaded zone and the first tongue and the female end comprising a second surface (48) between the third threaded zone and the second concavity, **characterized in that** in the made up condition, said first and second surfaces (47, 48) define an annular space comprising a zone with a large radial dimension (49) on the first and third threaded zone side and a zone with a small radial dimension (50) on the first tongue side and second concavity side, said smaller radial zone after expansion being able to form a metal-metal contact seal (60), the first tongue (41) then bearing on the second tongue (42).

2. A threaded connection according to claim 1, wherein a surface of the male end disposed between the first tongue (41) and the first concavity (43) and a surface of the female end disposed between the second tongue (42) and the second concavity (44) are in contact in the made up condition.

3. A threaded connection according to one of the preceding claims, wherein the first surface (47) of the male end (1) has a maximum diameter which is located at between one third and two thirds of its length.

4. A threaded connection according to one of the preceding claims, wherein close to the first tongue (41), the first surface of the male end (1) has a diameter which is greater than its diameter close to the first threaded zone (21).

5. A threaded connection according to one of the preceding claims, wherein the metal-metal contact seal is produced by means of a bulged portion close to the first tongue of the male end.

6. A threaded connection according to one of the preceding claims, wherein the zone with a large radial dimension (49) on the first and third threaded zone side is defined between an internal tapered surface and an external surface in the form of a circular arc, between an internal surface in the form of a circular arc and a tapered external surface, or between two surfaces in the form of a circular arc.

7. A threaded connection according to any one of the preceding claims, wherein the zone with a small radial dimension (50) on the first tongue and second concavity side has a zero radial dimension.

8. A threaded connection according to one of the preceding claims, wherein the first surface (47) of the male end (1) and/or the second surface (48) of the female end (2) has an annular groove (47e, 48c) close to the first threaded zone.

9. A threaded connection according to the preceding claim, wherein the groove (47e, 48c) has a depth in the range 6% to 13% of the thickness of the regular section of the tubular component.

10. A threaded connection according to one of the preceding claims, wherein the first and third threaded zones (21, 23) and/or the second and fourth threaded zones (22, 24) comprise radially self-hooking threads, preferably in the form of a dovetail.

11. A threaded connection according to one of the preceding claims, wherein the length of the first surface (47) of the male end (1) is in the range 150% to 175% of the thickness of the regular section of the tubular component, the length of the second surface (48) of the female end (2) is in the range 145% to 170% of the thickness of the regular section of the tubular component, and the length of the second concavity (44) is in the range 16% to 24% of the thickness of the regular section of the tubular component.

12. A threaded connection according to one of the preceding claims, wherein the thickness of the male end (1) at the zone of the annular space with a large radial dimension is in the range 66% to 76% of the thickness of the regular section of the tubular component, the thickness of the male end (1) at the zone of the annular space with a small radial dimension is in the range 75% to 85% of the thickness of the regular section of the tubular component, and the thickness of the female end (2) at the zone of the annular space with a large radial dimension is in the range 45% to 55% of the thickness of the regular section of the tubular component.

13. A threaded connection according to one of the preceding claims, wherein the thickness of the male end (1) between the first tongue and the second threaded zone is in the range 50% to 55% of the thickness of the regular section of the tubular component, and the thickness of the female end (2) between the second tongue and the fourth threaded zone is in the range 62% to 76% of the thickness of the regular section of the tubular component.

14. A threaded connection according to one of the preceding claims, wherein the radial dimension of the first tongue (41) and the first concavity (43) is in the range 22% to 27% of the thickness of the regular section of the tubular component, the radial dimension of the second tongue (42) is in the range 10% to 15% of the thickness of the regular section of the tubular component, and the radial dimension of the second concavity (44) is in the range 10% to 15% of the thickness of the regular section of the tubular component.

15. A process for obtaining a tight threaded connection, starting from a threaded connection according to one of the preceding claims, wherein said threaded connection undergoes diametral expansion in the plastic deformation range using an expansion ball with a diameter greater than the internal diameter of the tubular components which is displaced axially in the connection, said annular space being dimensioned such that the first surface (47) undergoes radial displacement towards the second surface (48) during diametral expansion such that said first (47) and second (48) surfaces interfere radially forming a metal-metal seal while allowing the zone of the annular space with a large radial dimension (49) to subsist.

16. A process according to the preceding claim, wherein the first surface (47) undergoes an axial displacement in the direction of the first tongue (41), the first tongue (41) is tipped in the direction of the second tongue (42) such that an internal surface of the first tongue (41) and an external surface of the second tongue (42) interfere radially forming a metal-metal seal.

17. A process according to one of the two preceding claims, wherein the degree of expansion is more than 15%, preferably 20%.
